# EUROPÄISCHE PATENTSCHRIFT

(11) **EP 3 309 325 B1**
(45) Veröffentlichungstag und Bekanntmachung des Hinweises auf die Patenterteilung: **27.11.2019**
(21) Anmeldenummer: 17196262.4
(22) Anmeldetag: 13.10.2017
(51) Int. Cl.: E04G 3/24, E04G 5/04

(54) **KONSOLGERÜST**
BRACKET FRAME
ÉCHAFAUDAGE À CONSOLE

(30) Priorität: 14.10.2016 DE 102016220051
(43) Veröffentlichungstag der Anmeldung: 18.04.2018
(73) Patentinhaber: PERI GMBH, 89264 Weissenhorn (DE)
(72) Erfinder: Schmid, Josef, 88481 Balzheim (DE)
(74) Vertreter: Kohler Schmid Möbus Patentanwälte

(56) Entgegenhaltungen:
- EP-A1- 3 034 870
- EP-A2- 0 064 183
- EP-A2- 2 060 706
- DE-A1-102005 030 333
- DE-U1-202016 103 596
- US-A- 4 611 784

## Beschreibung

Die Erfindung betrifft ein Konsolgerüst zur Befestigung an einer gekrümmten Oberfläche eines Bauwerks. Die Erfindung betrifft weiterhin ein Verfahren zur Anordnung eines Konsolgerüsts an ein Bauwerk.

Es ist bekannt, Konsolgerüste, beispielsweise von Kletterschalungen, an gekrümmten Gebäudewänden zu befestigen. Hierzu werden Sonderkonstruktionen vorgesehen, die fest eingestellte Winkel an dem Konsolgerüst aufweisen, die dem jeweiligen Gebäuderadius angepasst sind. Alternativ dazu ist es bekannt, ein Gelenk an einem fest mit der Gebäudewand verbundenen Befestigungselement vorzusehen, um eine Anpassung an die Anlagefläche des Konsolgerüsts zu erreichen. Diese bekannten Befestigungselemente sind jedoch schwer und unhandlich zu montieren. Weiterhin entstehen durch die bekannten Gelenke oftmals große Momente an der Aufhängestelle durch Kräfte am Konsolgerüst, beispielsweise bei großen Windlasten.

In US 4 611 784 wird ein Befestigungselement für eine Kletterschalung zum Gießen von Betonwänden beschrieben, das die Kletterschalung automatisch ver- und entriegelnd an Haltern von bereits gegossenen Teilen der Betonwand befestigt.

In EP 3 034 870 A1 wird ein Plattformsystem beschrieben, das im Inneren eines Turmes einer Windturbine aus Elementen aufgebaut wird. Das Plattformsystem wird innen an den Betonwänden des Turmes verankert. Die EP 3 034 870 A1 offenbart die Merkmale der einleitenden Teile der Ansprüche 1 und 13.

Die Konsole eines Sicherheitsgerüstes aus DE 20 2016 103 596 U1 umfasst einen gebäudeseitig befestigbaren Haltewinkel und einen Konsolenschenkel, der um zwei Lager des Haltewinkels um seine Längsachse schwenkbar gelagert ist. Hierdurch kann die Entfernung zu einer Gebäudewand eingestellt werden.

EP 0 064 183 A2 offenbart eine Kletterschalung für gekrümmte Betonwände, bei der die Arbeitsbühne von Trägern gehalten wird und auf zusätzlichen Schienen relativ zur Wand verschoben werden kann.

DE 10 2005 030 333 A1 offenbart ein Befestigungselement zur Befestigung einer Gleitschiene an einer Betonwand. Das Befestigungselement weist schwenkbare und/oder teleskopierbare Klauen zum teilweisen Umfassen der Gleitschiene auf. In EP 2 060 706 A2 wird ein Plattformsystem für das Innere eines Turmes einer Windturbine beschrieben. Eine Plattform ist an Stellen mit unterschiedlichem Innendurchmesser montierbar.

Aufgabe der vorliegenden Erfindung ist es demgegenüber, ein Konsolgerüst bereitzustellen, das weitestgehend flexibel an eine gekrümmte Gebäudeoberfläche, insbesondere unter Vermeidung hoher Streckmomente, montierbar ist. Aufgabe der vorliegenden Erfindung ist es weiterhin, ein Verfahren zur flexiblen, aber dennoch mechanisch stabilen Montage eines Konsolgerüsts bereitzustellen.

Die Aufgabe wird erfindungsgemäß durch ein Konsolgerüst mit den Merkmalen des Anspruchs 1 sowie durch ein Verfahren mit den Merkmalen des Anspruchs 13 gelöst. Die Unteransprüche geben zweckmäßige Weiterbildungen an.

Die erfindungsgemäße Aufgabe wird somit gelöst durch ein Konsolgerüst zur Befestigung an einer gekrümmten Oberfläche eines Bauwerks, wobei das Konsolgerüst einen ersten Träger aufweist sowie ein am ersten Träger angeordnetes erstes Koppelelement und eine erste Führung zum Bewegen des ersten Koppelelements relativ zum ersten Träger. Das erste Koppelelement ist um eine (virtuelle) Drehachse am ersten Träger verschwenkbar.

Durch die erste Führung wird ein Gelenk ausgebildet. Die gelenkige Anbindung des ersten Koppelelements an den ersten Träger ermöglicht eine konstruktiv signifikant vereinfachte Ausbildung des Befestigungselements. Gleichzeitig ist das Konsolgerüst flexibel an verschieden gekrümmte Gebäudeoberflächen anpassbar.

Der Schwenkbogen des ersten Koppelelements ist dabei aus Sicht des ersten Koppelelements vorzugsweise konvex ausgebildet. Aus Sicht des dem Koppelelement abgewandten Teils des Trägers ist der Schwenkbogen konkav am ersten Träger ausgebildet. Die (virtuelle) Drehachse befindet sich im Bereich des freien Endes des ersten Koppelelements, d. h. nahe am Bauwerk, insbesondere am freien Ende des ersten Koppelelements.

Vorzugsweise schneidet die zuvor diskutierte (virtuelle) Drehachse der ersten Führung den Träger nicht. Die Drehachse der ersten Führung verläuft im montierten Zustand des Konsolgerüsts vorzugsweise vertikal ±20°, insbesondere vertikal ±10°, vorzugsweise vertikal ±5°. Die erste Führung ermöglicht bevorzugt nur ein Verschwenken des ersten Koppelelements relativ zum ersten Träger um die erste Drehachse.

Streckmomente im Gelenk, die durch Zugkräfte am ersten Träger entstehen können, werden hierdurch signifikant reduziert. Weiterhin bewegt sich der Anbindungspunkt des ersten Koppelelements an das erste Befestigungselement beim Verschwenken des ersten Koppelelements relativ zum ersten Träger praktisch nicht. Die Abstände der Anbindungspunkte der Befestigungselemente am Bauwerk können dadurch - ungeachtet der Krümmung des Bauwerks - im Wesentlichen äquidistant gewählt werden.

Vorzugsweise befindet sich die Drehachse der ersten Führung im Bereich des ersten Befestigungselements. Ein Verschwenken des ersten Koppelelements relativ zum ersten Träger ändert hierdurch allenfalls minimal den Versatz des ersten Befestigungselements relativ zum ersten Träger.

Weiter bevorzugt befindet sich die Drehachse der ersten Führung im Auflagebereich des ersten Koppelelements am ersten Befestigungselement. In dieser besonders bevorzugten Ausgestaltung der Erfindung werden Streckmomente im Gelenk praktisch eliminiert und die Abstände der Auflagebereiche können äquidistant gewählt werden.

Zur Anbindung des ersten Koppelelements am ersten Befestigungselement kann das erste Koppelelement eine erste Aufnahmekulisse zur teilweisen Aufnahme des ersten Befestigungselements aufweisen. Die erste Aufnahmekulisse ist vorzugsweise U-förmig ausgebildet, wobei die U-Form im montierten Zustand des ersten Koppelelements nach unten geöffnet ist. Die geöffnete erste Aufnahmekulisse ermöglicht ein Aufsetzen des ersten Koppelelements auf das erste Befestigungselement, beispielsweise mithilfe eines Krans.

Das erste Koppelelement weist vorzugsweise an seinem freien Ende zum Kontakt mit dem Bauwerk eine erste Stirnplatte auf, die sich beim Anpressen des Konsolgerüsts an das Bauwerk an der Oberfläche des Bauwerks ausrichtet. Die erste Aufnahmekulisse ist bevorzugt in der ersten Stirnplatte ausgebildet.

Vorzugsweise ist die erste Führung in Form einer Kulissenführung ausgebildet. Die Kulissenführung weist dabei eine erste Kulisse und einen in der ersten Kulisse geführten ersten Führungskörper auf.

Weiter bevorzugt weist die erste Führung in Form einer Kulissenführung eine zweite Kulisse und einen in der zweiten Kulisse geführten zweiten Führungskörper auf.

Die erste Kulisse und/oder die zweite Kulisse ist/sind vorzugsweise in einer Ebene geschlossen ausgebildet.

Die erste Führung ermöglicht bevorzugt ein Verschwenken des ersten Koppelelements am ersten Träger um ±30°, insbesondere um ±20°, vorzugsweise um ±15°.

Um am ersten Koppelelement angreifende Zugkräfte zuverlässig in den ersten Träger ableiten zu können, liegt der erste Führungskörper bevorzugt abschnittsweise flächig an der ersten Kulisse an. Alternativ oder zusätzlich dazu kann der zweite Führungskörper abschnittsweise flächig an der zweiten Kulisse anliegen.

Die abschnittsweise flächige Anlage des ersten Führungskörpers bzw. des zweiten Führungskörpers wird konstruktiv bevorzugt durch den ersten Führungskörper in Form eines Mehrkants bzw. den zweiten Führungskörper in Form eines Mehrkants ausgebildet.

Der erste Träger kann einteilig ausgebildet sein. Vorzugsweise weist der erste Träger ein erstes Adapterteil und einen ersten Riegel auf. Das erste Koppelelement ist dabei durch die erste Führung mit dem ersten Adapterteil verbunden. Das erste Adapterteil ist reversibel lösbar am ersten Riegel befestigbar. Das erste Koppelelement kann hierdurch zusammen mit dem ersten Adapterteil vom ersten Riegel abgenommen werden, sodass das Konsolgerüst direkt am ersten Riegel an einer geraden Oberfläche eines Bauwerks befestigbar ist.

Das erste Adapterteil kann durch eine erste Steckbolzenverbindung mit dem ersten Riegel verbunden sein. Die erste Steckbolzenverbindung weist dabei einen ersten Adaptersteckbolzen auf, der in eine erste Trägeröffnung einführbar ist. Die erste Steckbolzenverbindung ermöglicht eine sichere und schnelle Montage des ersten Adapterteils am ersten Riegel.

Vorzugsweise ist die erste Trägeröffnung dabei schlüssellochförmig ausgebildet, wobei der erste Adaptersteckbolzen einen ersten Adaptersteckbolzenvorsprung aufweist, der zum Hintergreifen des Randes der ersten Trägeröffnung ausgebildet ist. Der erste Adaptersteckbolzen kann dadurch ohne einen separaten Splint gesichert werden.

Das erste Koppelelement kann einen ersten Koppelelementsteckbolzen zur Sicherung des ersten Befestigungselements am ersten Koppelelement aufweisen. Der erste Koppelelementsteckbolzen ist dabei in eine erste Koppelelementöffnung des ersten Koppelelements einführbar. Der erste Koppelelementsteckbolzen erlaubt die schnelle und sichere Montage des ersten Koppelelements am ersten Befestigungselement.

Die erste Koppelelementöffnung kann schlüssellochförmig ausgebildet sein, wobei der erste Koppelelementsteckbolzen einen ersten Koppelelementsteckboizenvorsprung zum Hintergreifen des Randes der ersten Koppefelementöffnung aufweist. Der erste Koppelelementsteckbolzen kann hierdurch ohne separaten Sicherungssplint gesichert werden.

Das Konsolgerüst kann eine erste Zusatzöffnung zur Aufbewahrung des ersten Koppelelementsteckbolzens aufweisen, wenn sich der erste Koppelelementsteckbolzen nicht in der ersten Koppelelementöffnung befindet. Der erste Koppelelementsteckbolzen liegt hierdurch stets griffbereit vor. Die erste Zusatzöffnung ist vorzugsweise geometrisch gleich der ersten Koppelelementöffnung ausgebildet.

Das Konsolgerüst weist vorzugsweise einen zweiten Träger und ein am zweiten Träger angeordnetes zweites Koppelelement auf, wobei das zweite Koppelelement zur Anbindung an ein zweites Befestigungselement ausgebildet ist. Das zweite Befestigungselement ist am Bauwerk anordenbar. Das Konsolgerüst weist dabei weiterhin eine zweite Führung zum, insbesondere konkaven, Schwenken des zweiten Koppelelements am zweiten Träger auf, sodass sich auch die Drehachse der zweiten Führung vorzugsweise nahe dem Bauwerk befindet. Allgemein weist die Drehachse der zweiten Führung vorzugsweise dieselben Eigenschaften der Drehachse der ersten Führung auf. Der zweite Träger ist starr mit dem ersten Träger verbunden. Das Konsolgerüst ist somit an zwei Punkten, d. h. an zwei Befestigungselementen an der gekrümmten Oberfläche eines Bauwerks befestigbar. Sowohl das erste Koppelelement als auch das zweite Koppelelement sind dabei zur gekrümmten Oberfläche des Bauwerks schwenkbar, insbesondere ohne dass sich Zugkräfte an dem Konsolgerüst in Form von signifikanten Momenten an der Aufhängestelle auswirken.

Der zweite Träger kann spiegelbildlich oder gleich dem ersten Träger ausgebildet sein. Alternativ oder zusätzlich dazu kann das zweite Koppelelement spiegelbildlich oder gleich dem ersten Koppelelement ausgebildet sein. Alternativ oder zusätzlich dazu kann das zweite Befestigungselement spiegelbildlich oder gleich dem ersten Befestigungselement ausgebildet sein. Alternativ oder zusätzlich dazu kann die zweite Führung gleich oder spiegelbildlich der ersten Führung ausgebildet sein.

Im Bereich der Drehachse der ersten Führung und/oder im Bereich der Drehachse der zweiten Führung kann/können weitere Drehachse(n) vorgesehen sein, sodass sich das erste Koppelelement und/oder das zweite Koppelelement an ein Bauwerk in Form einer Kuppel anpassen lassen.

Die erfindungsgemäße Aufgabe wird weiterhin gelöst durch ein Verfahren zur Anordnung eines Konsolgerüsts an einem Bauwerk, wobei das Konsolgerüst ein erstes Befestigungselement, einen ersten Träger, ein am ersten Träger angeordnetes Koppelelement und eine Führung des ersten Koppelelements am ersten Träger aufweist. Das Verfahren weist folgenden Verfa hrensschritt
A) Anpressen des Konsolgerüsts an das Bauwerk, sodass sich das Koppelelement an der Oberfläche des Bauwerks ausrichtet, wobei sich die Drehachse der ersten Führung vorzugsweise im Bereich des freien Endes des ersten Koppelelements befindet, und wobei die erste Führung zum konkaven Schwenken des ersten Koppelelements am ersten Träger ausgebildet ist, wobei aus Sicht des dem Koppelelement abgewandten Teils des Trägers der Schwenkbogen konkav am ersten Träger ausgebildet ist, sodass sich die Drehachse der ersten Führung nahe dem mit dem ersten Befestigungselement verbindbaren Bauwerk befindet, auf.
   Das Verfahren weist vorzugsweise weiterhin folgenden Verfahrensschritt
B) Absenken des Konsolengerüsts unter teilweiser Aufnahme des ersten Befestigungselements im ersten Koppelelement;
auf.

Das erfindungsgemäße Verfahren wird weiterhin bevorzugt mit einem Konsolgerüst gemäß den bevorzugten Ausführungsformen der vorstehenden Beschreibung bzw. gemäß den abhängigen Ansprüchen durchgeführt.

Weitere Merkmale und Vorteile der Erfindung ergeben sich aus der nachfolgenden detaillierten Beschreibung eines Ausführungsbeispiels der Erfindung, aus den Ansprüchen sowie anhand der Figuren der Zeichnung, die erfindungswesentliche Einzelheiten zeigt. Die verschiedenen Merkmale können je einzeln für sich oder zu mehreren in Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

Es zeigen:
- Figur 1: eine isometrische Darstellung eines Konsolgerüsts an einem Bauwerk mit gekrümmter Oberfläche;
- Figur 2a: eine Draufsicht auf das Konsolgerüst gemäß Figur 1 mit einer vergrößerten Teildarstellung;
- Figur 2b: eine weitere Draufsicht auf das Konsolgerüst gemäß Figur 1 mit einer vergrößerten Teildarstellung nach dem Anpressen des Konsolgerüsts an die gekrümmte Oberfläche des Bauwerks;
- Figur 3: eine isometrische Darstellung eines Teils des Konsolgerüsts gemäß der Figuren 1 bis 2b;
- Fign. 4a-4c: isometrische Teildarstellungen des Konsolgerüsts gemäß den Figuren 1 bis 3 bei dessen Montage;
- Figur 5a: eine teilweise Draufsicht auf das am Bauwerk montierte Konsolgerüst gemäß der Figuren 1 bis 4c;
- Figur 5b: eine Seitenansicht des Konsolgerüsts gemäß Figur 5a; und
- Figur 5c: eine Schnittdarstellung des Konsolgerüsts gemäß Figur 5b entlang der Linie C-C.

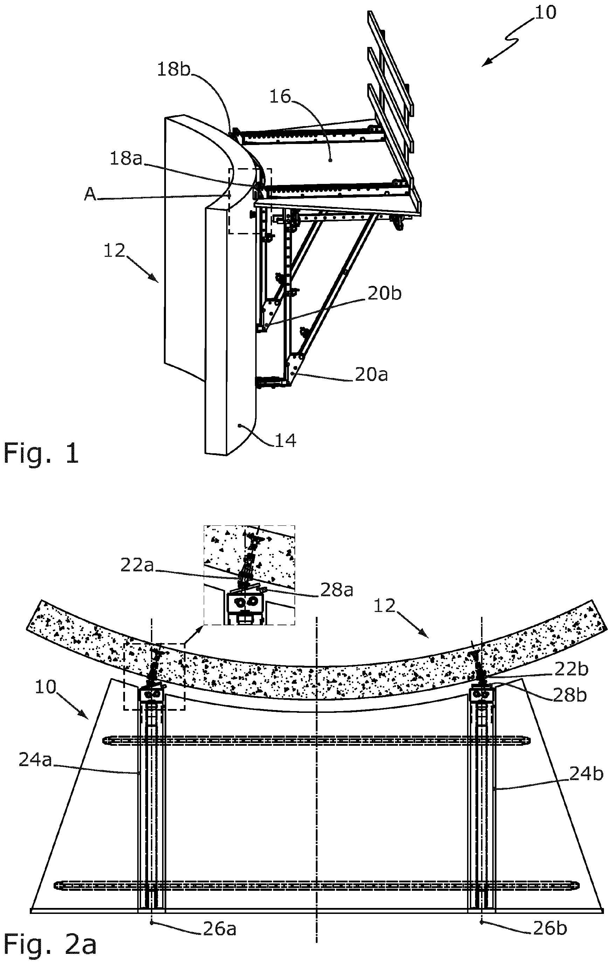

**Figur 1** zeigt ein Konsoigerüst **10** zur Anordnung an einem Bauwerk **12.** Das Bauwerk 12 weist eine gekrümmte Oberfläche **14** auf, an der das Konsolgerüst 10 anordenbar ist.

Das Konsolgerüst 10 weist eine Plattform **16** auf. Auf der Plattform 16 kann eine Schalung (nicht gezeigt) zur Erhöhung des Bauwerks 12 angeordnet sein. Das Konsolgerüst 10 ist über Aufhängepunkte **18a, 18b** am Bauwerk 12 anordenbar. Weiterhin stützt sich das Konsolgerüst 10 über Stützen **20a, 20b** am Bauwerk 12 ab. Das Konsolgerüst 10 kann durch einen Kran (nicht gezeigt) bewegt werden.

**Figur 2a** zeigt das Konsolgerüst 10 vor dessen endgültiger Befestigung am Bauwerk 12. Am Bauwerk 12 sind ein erstes Befestigungselement **22a** und zweites Befestigungselement **22b** angeordnet. Die Befestigung des Konsolgerüsts 10 am Bauwerk 12 erfolgt im Wesentlichen durch Einhängen des Konsolgerüsts 10 an den Befestigungselementen 22a, 22b.

Das Konsolgerüst 10 weist einen ersten Träger **24a** und einen zweiten Träger **24b** auf. Die Längsachsen **26a, 26b** der Träger 24a, 24b verlaufen parallel zueinander, um das Verschieben einer Schalung (nicht gezeigt) auf dem Konsolgerüst 10 parallel zu den Trägern 24a, 24b zu erleichtern.

An dem dem Bauwerk 12 zugewandten Ende der Träger 24a, 24b ist der erste Träger 24a mit einem ersten Koppelelement **28a** bzw. der zweite Träger 24b mit einem zweiten Koppelelement **28b** verbunden. Die Koppelelemente 28a, 28b sind begrenzt in einer Ebene verschwenkbar, die sich zwischen den Trägern 24a, 24b erstreckt, um eine sichere Befestigung des Konsolgerüsts 10 am Bauwerk 12 zu ermöglichen. In der in Figur 2a gezeigten Position, d. h. vor dem Anpressen des Konsolgerüsts 10 an das Bauwerk 12, können die Koppelelemente 28a, 28b - innerhalb ihres Schwenkbereichs - noch beliebig relativ zum Bauwerk 12 ausgerichtet sein.

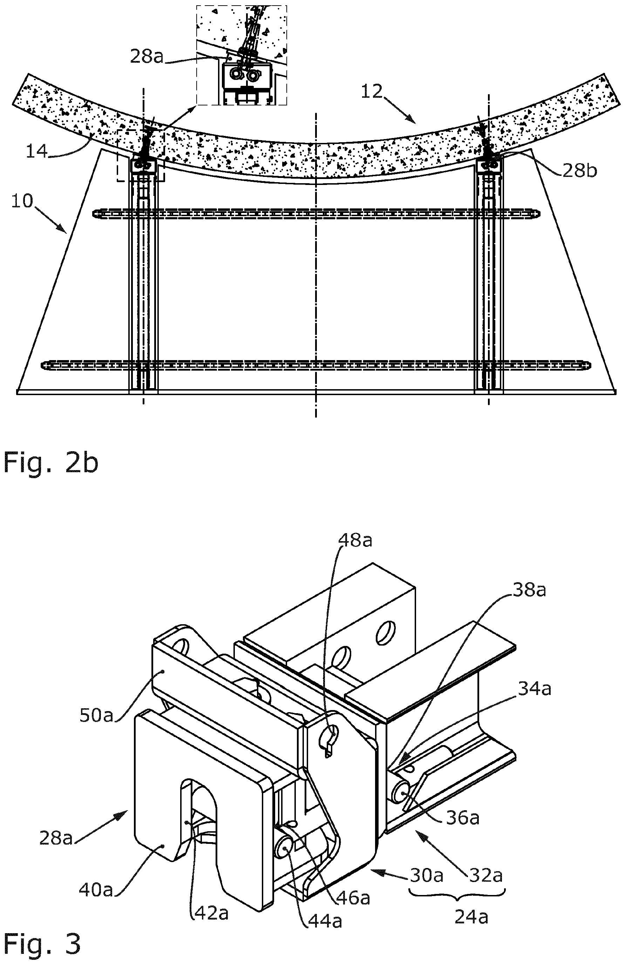

**Figur 2b** zeigt das Konsolgerüst 10, nachdem es, insbesondere an einem Kran (nicht gezeigt) hängend, gegen das Bauwerk 12 gepresst wurde. Aus Figur 2b ist ersichtlich, dass das erste Koppelelement 28a und das zweite Koppelelement 28b entlang der gekrümmten Oberfläche 14 des Bauwerks 12 ausgerichtet sind.

**Figur 3** zeigt einen Teil des ersten Trägers 24a, der ein erstes Adapterteil **30a** und einen ersten Riegel **32a** aufweist. Das erste Koppelelement 28a ist relativ zum ersten Adapterteil 30a verschwenkbar. Das erste Adapterteil 30a ist demgegenüber fest mit dem ersten Riegel 32a verbunden. Die Verbindung zwischen dem ersten Adapterteil 30a und dem ersten Riegel 32a erfolgt durch eine erste Steckbolzenverbindung **34a.** Die erste Steckbolzenverbindung 34a weist einen ersten Adaptersteckbolzen **36a** auf, der in eine erste Trägeröffnung **38a** teilweise eingeführt ist.

Das erste Koppelelement 28a weist endseitig eine erste Stirnplatte **40a** auf, die sich beim Anpressen des Konsolgerüsts 10 (siehe Figur 2b) an das Bauwerk 12 an der gekrümmten Oberfläche 14 des Bauwerks 12 ausrichtet. Das erste Koppelelement 28a weist eine erste Aufnahmekulisse **42a** auf, die im vorliegenden Fall in der ersten Stirnplatte 40a ausgebildet ist. Die erste Aufnahmekulisse 42a ist - im montierten Zustand des Konsolgerüsts 10 (siehe Figur 2b) - unterenends geöffnet, um das erste Befestigungselement 22a (siehe Figur 2a) teilweise aufzunehmen. Nach der teilweisen Aufnahme des ersten Befestigungselements 22a in der ersten Aufnahmekulisse 42a ist das erste Koppelelement 28a durch einen ersten Koppelelementsteckboizen **44a** am ersten Befestigungselement 22a (siehe Figur 2a) sicherbar. Hierzu ist der erste Koppelelementsteckbolzen 44a teilweise in eine erste Koppelelementöffnung **46a** einführbar.

Befindet sich der erste Koppelelementsteckbolzen 44a nicht in der ersten Koppelelementöffnung 46a, kann der erste Koppelelementsteckboizen 44a in eine erste Zusatzöffnung **48a** eingeführt und dadurch am ersten Koppelelement 28a verstaut werden. Die erste Zusatzöffnung 48a ist in einem ersten Haltebügel **50a** des ersten Koppelelements 28a ausgebildet, durch den das erste Adapterteil 30a zusammen mit dem ersten Koppelelement 28a leicht handhabbar ist.

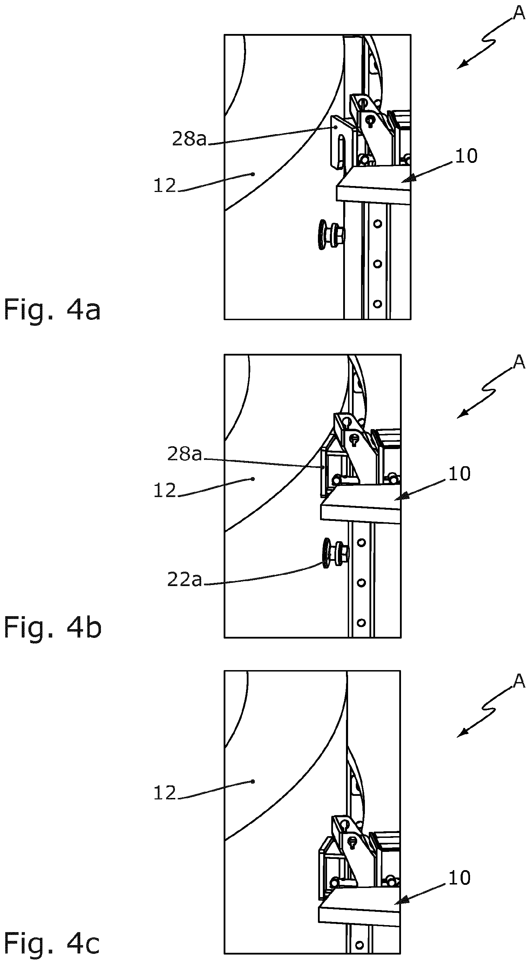

**Figur 4a** zeigt den Ausschnitt **A** gemäß Figur 1. Aus Figur 4a ist ersichtlich, dass das erste Koppelelement 28a beim Annähern des Konsolgerüsts 10 an das Bauwerk 12 noch nicht ausgerichtet ist.

**Figur 4b** zeigt den Ausschnitt A nach dem Anpressen des ersten Koppelelements 28a an das Bauwerk 12, wodurch sich das erste Koppelelement 28a an das Bauwerk 12 anschmiegt. Anschließend wird das Konsolgerüst 10 abgesenkt. Dabei wird das erste Koppelelement 28a auf das erste Befestigungselement 22a aufgefädelt.

**Figur 4c** zeigt den Ausschnitt A, wobei das Konsolgerüst 10 abgesenkt und fest am Bauwerk 12 verhakt ist.

Aus den Figuren 4a bis 4c wird das erfindungsgemäße Verfahren ersichtlich, bei dem das Konsolgerüst 10 dem Bauwerk 12 genähert wird. Durch den Kontakt des Konsolgerüsts 10 mit dem Bauwerk 12 werden alle Koppelelemente des Konsolgerüsts 10, hier das erste Koppelelement 28a, an der Oberfläche des Bauwerks 12 ausgerichtet. Nach dem Ausrichten der Koppelelemente wird das Konsolgerüst 10 abgesenkt, wodurch die Koppelelemente an Befestigungselementen, hier dem Befestigungselement 22a, angeordnet werden. Anschließend kann/können zumindest ein Koppelelement, hier das erste Koppelelement 28a, insbesondere mehrere Koppelelemente, vorzugsweise alle Koppelelemente durch jeweils einen Koppelelementsteckbolzen, hier dem Koppelelementsteckbolzen 44a, am jeweiligen Befestigungselement gesichert werden.

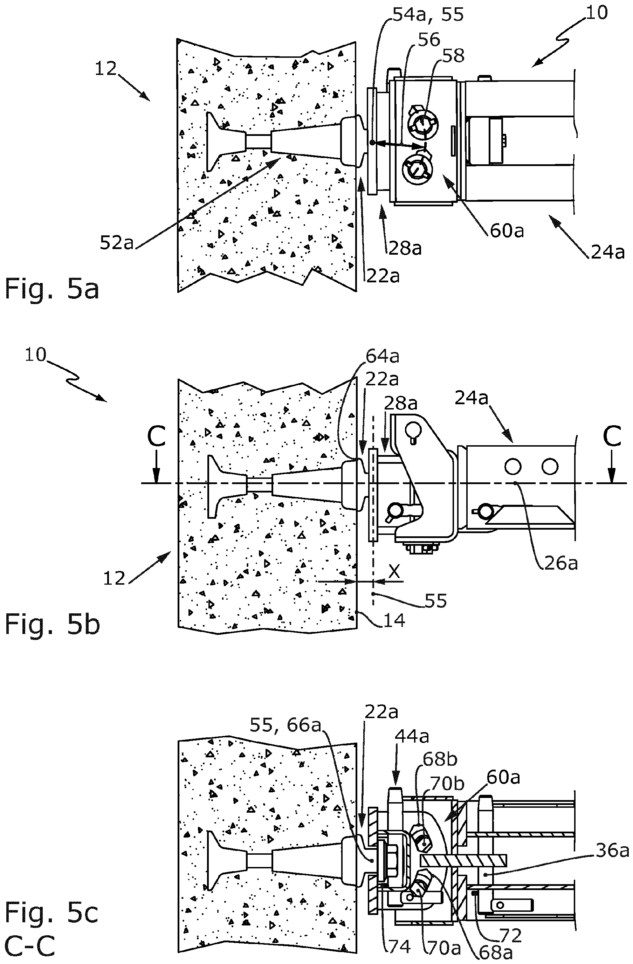

**Figur 5a** zeigt einen Teil des Konsolgerüsts 10 am Bauwerk 12 gemäß Figur 4c. Figur 5a zeigt, dass das erste Befestigungselement 22a in Form eines Vorsprungs ausgebildet ist, der mittels einer Schraube an einem ersten Anker **52a** festgeschraubt ist. Das erste Koppelelement 28a stützt sich am ersten Befestigungselement 22a ab. Die Auflage des ersten Koppelelements 28a erfolgt an einem ersten Auflagepunkt **54a** des ersten Koppelelements 28a. Durch den ersten Auflagepunkt 54a läuft gleichzeitig die (virtuelle) Drehachse **55** des ersten Koppelelements 28a relativ zum ersten Träger 24a, die hier in der Draufsicht als Punkt dargestellt ist. Ein Schwenkradius **56** des ersten Koppelelements 28a am ersten Träger 24a ist durch einen Doppelpfeil angedeutet. Ein Schwenkbogen **58** wird durch das Verschwenken des ersten Koppelelements 28a erzeugt und durch eine strichpunktierte Linie beschrieben. Der Schwenkbogen 58 liegt dabei konkav im ersten Träger 24a. Die Verschwenkbarkeit des ersten Koppelelements 28a am ersten Träger 24a wird durch eine erste Führung **60a** gewährleistet.

**Figur 5b** zeigt das Konsolgerüst 10 in einer Seitenansicht. Aus Figur 5b ist die (virtuelle) Drehachse 55 des ersten Koppelelements 28a am ersten Träger 24a ersichtlich. Die Drehachse 55 verläuft im vorliegenden Fall parallel zur gekrümmten Oberfläche 14 des Bauwerks 12, Das erste Koppelelement 28a ist einzig um diese Drehachse 55 relativ zum ersten Träger 24a verschwenkbar. Weiterhin verläuft die Drehachse 55 im vorliegenden Fall senkrecht zur ersten Längsachse 26a (siehe auch Figur 2a) des ersten Trägers 24a.

Das erste Befestigungselement 22a verläuft mit einer ersten Anlagefläche **64a** parallel zur gekrümmten Oberfläche 14 des Bauwerks 12. Die Drehachse 55 ist um den Abstand **X** von dieser ersten Anlagefläche 64a beabstandet. Der Abstand X kann zwischen 0 Zentimeter und 15 Zentimeter, insbesondere zwischen 0 Zentimeter und 10 Zentimeter, vorzugsweise zwischen 0 Zentimeter und 5 Zentimeter betragen.

**Figur 5c** zeigt den Schnitt C-C gemäß Figur 5b. Aus Figur 5c ist ersichtlich, dass das erste Befestigungselement 22a eine erste Einschnürung **66a,** insbesondere in Form einer radialen Einschnürung, aufweist, in deren Bereich sich die Drehachse 55 befindet.

Weiterhin ist aus Figur 5c ersichtlich, dass die erste Führung 60a in Form einer Kulissenführung ausgebildet ist, die eine erste Kulisse **68a** und eine zweite Kulisse **68b** aufweist. In der ersten Kulisse 68a ist ein erster Führungskörper **70a** geführt. In der zweiten Kulisse 68b ist ein zweiter Führungskörper **70b** geführt. Zur Vermeidung einer Linienanlage sind die Führungskörper 70a, 70b jeweils in Form eines Mehrkants, insbesondere in Form eines Sechskants, ausgebildet.

Aus Figur 5c ist weiter ersichtlich, dass der erste Adaptersteckbolzen 36a einen Adaptersteckbolzenvorsprung **72** und der erste Koppelelementsteckbolzen 44a einen Koppelelementsteckbolzenvorsprung **74** aufweisen, um eine splintfreie Sicherung des ersten Adaptersteckbolzens 36a bzw. des ersten Koppelelementsteckbolzens 44a in der schlüssellochförmigen ersten Zusatzöffnung 48a (siehe Figur 3) bzw. der schlüssellochförmigen ersten Koppelelementöffnung 46a (siehe Figur 3) zu ermöglichen. In der in Figur 5c gezeigten Position wird der erste Adaptersteckbolzen 36a in der ersten Trägeröffnung 38a (siehe Figur 3) durch ein Einklemmen seines Griffs in einer Tasche (siehe Figuren 3 und 5b) gehalten.

## Patentansprüche

1. Konsolgerüst (10) zur Befestigung an einer gekrümmten Oberfläche (14) eines Bauwerks (12), wobei das Konsolgerüst (10) Folgendes aufweist:
a) Einen ersten Träger (24a);
b) ein am ersten Träger (24a) angeordnetes erstes Koppelelement (28a) zur Anbindung an ein erstes Befestigungselement (22a), das am Bauwerk (12) anordenbar ist;
c) eine erste Führung (60a),
**dadurch gekennzeichnet, dass**
die erste Führung zum konkaven Schwenken des ersten Koppelelements (28a) am ersten Träger (24a) ausgebildet ist, wobei aus Sicht des dem Koppelelement (28a) abgewandten Teils des Trägers (24a) der Schwenkbogen konkav am ersten Träger (24a) ausgebildet ist, sodass sich die Drehachse (55) der ersten Führung (60a) nahe dem mit dem ersten Befestigungselement (22a) verbindbaren Bauwerk (12) befindet.

2. Konsolgerüst nach Anspruch 1, bei dem sich die Drehachse (55) der ersten Führung (60a) im Bereich des ersten Befestigungselements (22a) befindet.

3. Konsolgerüst nach Anspruch 2, bei dem sich die Drehachse (55) der ersten Führung (60a) im Auflagebereich des ersten Koppelelements (28a) am ersten Befestigungselement (22a) befindet.

4. Konsolgerüst nach einem der vorhergehenden Ansprüche, bei dem das erste Koppelelement (28a) eine geöffnete erste Aufnahmekulisse (42a) zur teilweisen Aufnahme des ersten Befestigungselements (22a) aufweist.

5. Konsolgerüst nach einem der Ansprüche 1 bis 4, bei dem die erste Führung (60a) in Form einer Kulissenführung mit einer ersten Kulisse (68a) und einem in der ersten Kulisse (68a) geführten ersten Führungskörper (70a) ausgebildet ist.

6. Konsolgerüst nach Anspruch 5, bei dem die erste Führung (60a) eine zweite Kulisse (68b) und einen in der zweiten Kulisse (68b) geführten zweiten Führungskörper (70b) aufweist.

7. Konsolgerüst nach Anspruch 5 oder 6, bei dem der erste Führungskörper (70a) abschnittsweise flächig an der ersten Kulisse (68a) anliegt und/oder der zweite Führungskörper (70b) abschnittsweise flächig an der zweiten Kulisse (68b) anliegt.

8. Konsolgerüst nach Anspruch 7, bei dem der erste Führungskörper (70a) im Bereich der ersten Kulisse (68a) im Querschnitt in Form eines Mehrkants ausgebildet ist und/oder der zweite Führungskörper (70b) im Bereich der zweiten Kulisse (68b) im Querschnitt in Form eines Mehrkants ausgebildet ist.

9. Konsolgerüst nach einem der vorhergehenden Ansprüche, bei dem der erste Träger (24a) ein erstes Adapterteil (30a) und einen ersten Riegel (32a) aufweist, wobei das erste Koppelelement (28a) durch die erste Führung (60a) mit dem ersten Adapterteil (30a) verbunden ist und das erste Adapterteil (30a) reversibel lösbar am ersten Riegel (32a) angeordnet ist.

10. Konsolgerüst nach Anspruch 9, bei dem das erste Adapterteil (30a) durch eine erste Steckbolzenverbindung (34a) mit dem ersten Riegel (32a) verbunden ist, wobei die erste Steckbolzenverbindung (36a) einen ersten Adaptersteckbolzen (36a) aufweist, der in eine erste Trägeröffnung (38a) einführbar ist.

11. Konsolgerüst nach einem der vorhergehenden Ansprüche, bei dem das erste Koppelelement (28a) einen ersten Koppelelementsteckbolzen (44a) zur Sicherung des ersten Befestigungselements (22a) am ersten Koppelelement (28a) aufweist, wobei der erste Koppelelementsteckbolzen (44a) in eine erste Koppelelementöffnung (46a) des ersten Koppelelements (28a) einführbar ist.

12. Konsolgerüst nach einem der vorhergehenden Ansprüche, bei dem das Konsolgerüst (10) Folgendes aufweist:
d) Einen zweiten Träger (24b);
e) ein am zweiten Träger (24b) angeordnetes zweites Koppelelement (28b) zur Anbindung an ein zweites Befestigungselement (22b), das am Bauwerk (12) anordenbar ist;
f) eine zweite Führung zum Schwenken des zweiten Koppelelements (28b) am zweiten Träger (24b), insbesondere zum konkaven Schwenken des zweiten Koppelelements (28b) am zweiten Träger (24b), sodass sich die Drehachse der zweiten Führung nahe dem mit dem zweiten Befestigungselement (22b) verbindbaren Bauwerk (12) befindet;
wobei der zweite Träger (24b) starr mit dem ersten Träger (24a) verbunden ist.

13. Verfahren zur Anordnung eines Konsolgerüsts (10) an ein Bauwerk (12) mit einem ersten Befestigungselement (22a), wobei das Konsolgerüst (10) einen ersten Träger (24a), ein am ersten Träger (24a) angeordnetes erstes Koppelelement (28a) und eine erste Führung (60a) des ersten Koppelelements (28a) am ersten Träger (24a) aufweist, mit dem Verfahrensschritt:
A) Anpressen des Konsolgerüsts (10) an das Bauwerk (12), sodass sich das erste Koppelelement (28a) an der Oberfläche (14) des Bauwerks (12) ausrichtet,
**dadurch gekennzeichnet, dass**
sich die Drehachse (55) der ersten Führung (60a) insbesondere im Bereich des freien Endes des ersten Koppelelements (28a) befindet und dass
die erste Führung zum konkaven Schwenken des ersten Koppelelements (28a) am ersten Träger (24a) ausgebildet ist, wobei aus Sicht des dem Koppelelement (28a) abgewandten Teils des Trägers (24a) der Schwenkbogen konkav am ersten Träger (24a) ausgebildet ist, sodass sich die Drehachse (55) der ersten Führung (60a) nahe dem mit dem ersten Befestigungselement (22a) verbindbaren Bauwerk (12) befindet.

14. Verfahren nach Anspruch 13, bei dem das Verfahren weiterhin folgenden Verfahrensschritt aufweist:
B) Absenken des Konsolgerüsts (10) unter teilweiser Aufnahme des ersten Befestigungselements (22a) im ersten Koppelelement (28a).

## Claims

1. Bracket scaffold (10) for fastening to a curved surface (14) of a construction (12), the bracket scaffold (10) comprising the following:
a) a first support (24a);
b) a first coupling element (28a) arranged on the first support (24a) for connecting to a first fastening element (22a) which can be arranged on the construction (12);
c) a first guide (60a),
**characterized in that**
the first guide is designed to concavely pivot the first coupling element (28a) on the first support (24a), the pivot arc being concave on the first support (24a), as seen from the part of the support (24a) that faces away from the coupling element (28a), such that the rotational axis (55) of the first guide (60a) is located near the construction (12) which can be connected to the first fastening element (22a).

2. Bracket scaffold according to claim 1, in which the rotational axis (55) of the first guide (60a) is located in the region of the first fastening element (22a).

3. Bracket scaffold according to claim 2, in which the rotational axis (55) of the first guide (60a) is located in the bearing region of the first coupling element (28a) on the first fastening element (22a).

4. Bracket scaffold according to any of the preceding claims, in which the first coupling element (28a) comprises an open first receiving slot (42a) for partially receiving the first fastening element (22a).

5. Bracket scaffold according to any of claims 1 to 4, in which the first guide (60a) is in the form of a slotted guide comprising a first slot (68a) and a first guide body (70a) guided in the first slot (68a).

6. Bracket scaffold according to claim 5, in which the first guide (60a) comprises a second slot (68b) and a second guide body (70b) guided in the second slot (68b).

7. Bracket scaffold according to either claim 5 or claim 6, in which the first guide body (70a) rests flat against the first slot (68a) in portions and/or the second guide body (70b) rests flat against the second slot (68b) in portions.

8. Bracket scaffold according to claim 7, in which the first guide body (70a) has, in the region of the first slot (68a), a cross section in the form of a polygon and/or the second guide body (70b) has, in the region of the second slot (68b), a cross section in the form of a polygon.

9. Bracket scaffold according to any of the preceding claims, in which the first support (24a) comprises a first adapter part (30a) and a first bar (32a), wherein the first coupling element (28a) is connected to the first adapter part (30a) by means of the first guide (60a) and the first adapter part (30a) is reversibly detachably arranged on the first bar (32a).

10. Bracket scaffold according to claim 9, in which the first adapter part (30a) is connected to the first bar (32a) by means of a first socket pin connection (34a), wherein the first socket pin connection (36a) has a first adapter socket pin (36a) which can be inserted into a first support opening (38a).

11. Bracket scaffold according to any of the preceding claims, in which the first coupling element (28a) comprises a first coupling element socket pin (44a) for securing the first fastening element (22a) on the first coupling element (28a), wherein the first coupling element socket pin (44a) can be inserted into a first coupling element opening (46a) in the first coupling element (28a).

12. Bracket scaffold according to any of the preceding claims, wherein the bracket scaffold (10) comprises the following:
d) a second support (24b);
e) a second coupling element (28b) arranged on the second support (24b) for connecting to a second fastening element (22b) which can be arranged on the construction (12);
f) a second guide for pivoting the second coupling element (28b) on the second support (24b), in particular for concavely pivoting the second coupling element (28b) on the second support (24b), such that the rotational axis of the second guide is located near the construction (12) which can be connected to the second fastening element (22b);
wherein the second support (24b) is rigidly connected to the first support (24a).

13. Method for arranging a bracket scaffold (10) on a construction (12) having a first fastening element (22a), the bracket scaffold (10) having a first support (24a), a first coupling element (28a) arranged on the first support (24a), and a first guide (60a) of the first coupling element (28a) on the first support (24a), comprising the method step of:
A) pressing the bracket scaffold (10) onto the construction (12) such that the first coupling element (28a) aligns with the surface (14) of the construction (12),
**characterized in that**
the rotational axis (55) of the first guide (60a) is located in particular in the region of the free end of the first coupling element (28a) and **in that** the first guide is designed to concavely pivot the first coupling element (28a) on the first support (24a), the pivot arc being concave on the first support (24a), as seen from the part of the support (24a) that faces away from the coupling element (28a), such that the rotational axis (55) of the first guide (60a) is located near the construction (12) which can be connected to the first fastening element (22a).

14. Method according to claim 13, in which the method further comprises the following method step:
B) lowering the bracket scaffold (10) while partially receiving the first fastening element (22a) in the first coupling element (28a).

## Revendications

1. Échafaudage à console (10) destiné à être fixé sur une surface (14) incurvée d'une construction (12), l'échafaudage à console (10) comprenant les éléments suivants :
a) un premier support (24a) ;
b) un premier élément de couplage (28a) disposé sur le premier support (24a) pour le raccordement à un premier élément de fixation (22a) qui peut être disposé sur la construction (12) ;
c) un premier guide (60a),
**caractérisé en ce que**
le premier guide permettant le pivotement concave du premier élément de couplage (28a) est formé sur le premier support (24a), l'arc de pivotement étant conçu de manière concave sur le premier support (24a) du point de vue de la partie du support (24a) orientée vers l'élément de couplage (28a) de sorte que l'axe de rotation (55) du premier guide (60a) est situé près de la construction (12) pouvant être reliée au premier élément de fixation (22a).

2. Échafaudage à console selon la revendication 1, dans lequel l'axe de rotation (55) du premier guide (60a) est situé dans la région du premier élément de fixation (22a).

3. Échafaudage à console selon la revendication 2, dans lequel l'axe de rotation (55) du premier guide (60a) est situé dans la région de support du premier élément de couplage (28a) sur le premier élément de fixation (22a).

4. Échafaudage à console selon l'une des revendications précédentes, dans lequel le premier élément de couplage (28a) présente une première coulisse de réception (42a) ouverte destinée à recevoir partiellement le premier élément de fixation (22a).

5. Échafaudage à console selon l'une des revendications 1 à 4, dans lequel le premier guide (60a) est conçu sous la forme d'un guide de coulisse comportant une première coulisse (68a) et un premier corps de guide (70a) guidé dans la première coulisse (68a).

6. Échafaudage à console selon la revendication 5, dans lequel le premier guide (60a) présente une seconde coulisse (68b) et un second corps de guide (70b) guidé dans la seconde coulisse (68b).

7. Échafaudage à console selon la revendication 5 ou 6, dans lequel le premier corps de guide (70a) s'appuie partiellement à plat contre la première coulisse (68a) et/ou le second corps de guide (70b) s'appuie partiellement à plat contre la seconde coulisse (68b).

8. Échafaudage à console selon la revendication 7, dans lequel le premier corps de guide (70a) est formé en section transversale sous la forme d'un polygone dans la région de la première coulisse (68a) et/ou le second corps de guide (70b) est formé en section transversale sous la forme d'un polygone dans la région de la seconde coulisse (68b).

9. Échafaudage à console selon l'une des revendications précédentes, dans lequel le premier support (24a) présente une première pièce d'adaptation (30a) et un premier loquet (32a), le premier élément de couplage (28a) étant relié, par le premier guide (60a), avec la première pièce d'adaptation (30a), et la première pièce d'adaptation (30a) étant disposée de manière amovible et réversible sur le premier loquet (32a).

10. Échafaudage à console selon la revendication 9, dans lequel la première pièce d'adaptation (30a) est reliée par une première liaison à goupille enfichable (34a) au premier loquet (32a), la première liaison à goupille enfichable (36a) présentant une première goupille enfichable d'adaptation (36a) insérable dans une première ouverture de support (38a).

11. Échafaudage à console selon l'une des revendications précédentes, dans lequel le premier élément de couplage (28a) présente une première goupille enfichable d'élément de couplage (44a) permettant de fixer le premier élément de fixation (22a) sur le premier élément de couplage (28a), la première goupille enfichable d'élément de couplage (44a) étant insérable dans une première ouverture d'élément de couplage (46a) du premier élément de couplage (28a).

12. Échafaudage à console selon l'une des revendications précédentes, l'échafaudage à console (10) comprenant les éléments suivants :
d) un second support (24b) ;
e) un second élément de couplage (28b) disposé sur le second support (24b) pour le raccordement à un second élément de fixation (22b) qui peut être disposé sur la construction (12) ;
f) un second guide permettant d'assurer le pivotement du second élément de couplage (28b) sur le second support (24b), en particulier pour le pivotement concave du second élément de couplage (28b) sur le second support (24b), de sorte que l'axe de rotation du second guide est situé près de la construction (12) pouvant être reliée au second élément de fixation (22b) ;
dans lequel le second support (24b) est relié de manière rigide au premier support (24a).

13. Procédé de disposition d'un échafaudage à console (10) sur une construction (12) comportant un premier élément de fixation (22a), l'échafaudage à console (10) présentant un premier support (24a), un premier élément de couplage (28a) disposé sur le premier support (24a) et un premier guide (60a) du premier élément de couplage (28a) sur le premier support (24a), comportant l'étape de procédé :
A) de pressage de l'échafaudage à console (10) contre la construction (12) de sorte que le premier élément de couplage (28a) s'aligne avec la surface (14) de la construction (12),
**caractérisé en ce que**
l'axe de rotation (55) du premier guide (60a) est situé en particulier dans la région de l'extrémité libre du premier élément de couplage (28a), et **en ce que** le premier guide est conçu pour le pivotement concave du premier élément de couplage (28a) sur le premier support (24a), l'arc de pivotement étant conçu de manière concave sur le premier support (24a) du point de vue de la partie du support (24a) orientée vers l'élément de couplage (28a) de sorte que l'axe de rotation (55) du premier guide (60a) est situé près de la construction (12) pouvant être reliée au premier élément de fixation (22a).

14. Procédé selon la revendication 13, dans lequel le procédé comporte en outre l'étape de procédé :
B) d'abaissement de l'échafaudage à console (10) suite à la réception partielle du premier élément de fixation (22a) dans le premier élément de couplage (28a).
